# EUROPÄISCHE PATENTSCHRIFT

(11) **EP 3 014 976 B1**
(45) Veröffentlichungstag und Bekanntmachung des Hinweises auf die Patenterteilung: **12.12.2018**
(21) Anmeldenummer: 15186634.0
(22) Anmeldetag: 24.09.2015
(51) Int. Cl.: A01D 75/18

(54) **LANDMASCHINE**
AGRICULTURAL MACHINE
MACHINE AGRICOLE

(30) Priorität: 03.11.2014 DE 102014016183
(43) Veröffentlichungstag der Anmeldung: 04.05.2016
(73) Patentinhaber: PÖTTINGER Landtechnik GmbH, 4710 Grieskirchen (AT)
(72) Erfinder: Ehrentraut, Michael, 4720 Neumarkt (AT)
(74) Vertreter: Thoma, Michael

(56) Entgegenhaltungen:
- EP-A1- 0 512 602
- EP-A1- 1 925 198
- EP-A2- 2 057 887

## Beschreibung

Die vorliegende Erfindung betrifft eine Landmaschine in Form eines an einen Schlepper anbaubaren Grünlandgeräts, insbesondere Mäh- oder Heuwerbungsmaschine, mit zumindest einer Arbeitswerkzeugeinheit zum Ausführen der Grünlandbearbeitung, sowie zumindest einem Hydraulikaktor zum Anheben und/oder Wegbewegen der Arbeitswerkzeugeinheit aus einer Arbeitsstellung, wobei der Hydraulikaktor von einer steuerbaren Betriebsdruckversorgung beaufschlagbar ist.

Die Schrift EP 0 512 602 A1 zeigt eine Mähmaschine, deren Mähaggregat bei Anfahren gegen ein Hindernis nach hinten wegschwenken kann. Der das Mähaggregat tragende Rahmen ist hierbei durch einen Vorspannzylinder in die Soll-Arbeitsstellung vorgespannt, der sozusagen vom Hindernis aufgedrückt wird, wenn das Aggregat an das Hindernis anfährt. Die EP 1 925 198 A1 und EP 2 057 887 A2 zeigen jeweils ein landwirtschaftliches Anbaugerät, dessen die Arbeitsaggregate tragender Rahmen bei Anfahren gegen ein Hindernis wegschwenken kann und von einem Vorspannzylinder in die Sollstellung zurückgeholt wird.

Bei landwirtschaftlichen Gründlandgeräten wie Mähmaschinen oder Heuwerbern wie Zetter oder Schwader treten diverse Situationen auf, in denen die Arbeitswerkzeugeinheiten anzuheben bzw. aus dem Arbeitsbereich wegzubewegen sind. Dies ist einerseits am Vorgewende der Fall, wenn die Mähwerkseinheiten oder die Recheinheiten in die Vorgewendestellung zu bewegen sind, oder beim Straßentransport, wenn die genannten Arbeitswerkzeugeinheiten in die Transportstellung zu verbringen sind. Hiervon abgesehen sind entsprechende Stellbewegungen bei der Gefahr von Kollisionen der Arbeitswerkzeuge mit Hindernissen am oder über dem Boden sowie Kollisionen mit in den Arbeitsbereich gelangenden Tieren auszuführen.

Moderne Landmaschinen fahren mit beträchtlicher Geschwindigkeit über die zu bearbeitenden Flächen, so dass ein Auftreffen der Arbeitswerkzeuge auf am Boden liegende Hindernisse wie beispielsweise Steine, Baumstümpfe oder dergleichen beträchtlichen Schaden am Gerät anrichten können. Hierbei ist es aufgrund der höher werdenden Fahrgeschwindigkeiten zunehmend schwierig, die kollisionsgefährdeten Bauteile rechtzeitig anzuheben bzw. wegzubewegen, um eine Kollision zu vermeiden. Insofern besteht ein Bestreben darin, den zu bearbeitenden Boden immer weiter vorausschauend zu überwachen, beispielsweise mittels berührungsloser Sensoren, um rechtzeitig reagieren zu können, beispielsweise die Rechkreisel von Heuwerbungsmaschinen hochschwenken oder Mähwerke nach oben fahren zu können. Von der Problematik der Maschinenbeschädigung abgesehen ist vor allen Dingen auch eine Verletzung von in den Arbeitsbereich geratenden Tieren zu verhindern.

Um dieser Sicherheitsproblematik entgegen zu treten, wurden bereits diverse Sicherheitsvorrichtungen an Landmaschinen vorgeschlagen. Beispielsweise beschreibt die EP 13 00 065 B1 eine Mähmaschine mit einer Sicherheitsvorrichtung, die beim Auftreffen der Mäheinrichtung auf ein Hindernis ein Nach-hintenschwenken sowie zusätzlich ein Anheben des Mähbalkens bewirkt. Hierzu ist das Mähwerk an einem Tragbalken schwenkbar gehalten, der selbst derart nachgiebig an einer Dreipunktanbauvorrichtung gelagert ist, dass ein Zurückschwenken des Tragbalkens gleichzeitig ein Nach-oben-kippen der Mäheinrichtung bewirkt. Diese Sicherheitsvorrichtung reagiert allerdings erst bei Auftreffen auf ein Hindernis und damit sozusagen erst, wenn es schon zu spät ist. In ähnlicher Weise ist es aus der DE 102 34 741 A1 bekannt, bei einer Mähmaschine das Seitenmähwerk um eine vertikale Achse entgegen der Fahrtrichtung verschwenkbar aufzuhängen, so dass das Seitenmähwerk nach hinten schwenken kann, wenn es auf ein Hindernis trifft.

Um ein Auftreffen auf ein Hindernis erst gar nicht zuzulassen, schlägt die Schrift DE 103 46 818 A1 eine Mähmaschine vor, bei der mittels eines Sensors der vor dem Mähwerk liegende Bereich abgetastet wird, um Hindernisse vorzeitig zu erkennen. Das Mähwerk ist dabei an einem teleskopierbaren Träger aufgehängt, der über Hydraulikzylinder zusammengefahren werden kann, um bei Erfassung eines Hindernisses das Mähwerk aus dem Kollisionsbereich wegzubewegen. Mit zunehmenden Fahrgeschwindigkeiten wird es jedoch schwierig, eine Kollision mit dem Hindernis tatsächlich zu vermeiden. Wird die Bodenabtastung zu weit vorausschauend ausgebildet, sinkt die Genauigkeit der Erkennung selbst bzw. treten Abstimmungsprobleme bei Richtungsänderungen oder Geschwindigkeitsänderungen auf. Wird indes die Hinderniserkennung nur knapp vor dem Gerät vorgenommen, kann der entsprechende Maschinenteil oft nicht mehr schnell genug bewegt werden.

Ferner ist aus der EP 20 57 886 B1 eine Mähmaschine bekannt, deren Mähwerkseinheiten durch Zünden eines Gasgenerators nach Art eines Airbags nach oben gerissen werden können. Hierzu ist der genannte Gasgenerator mit den Hubzylindern verbunden, die die Tragarme der Mähwerkseinheiten nach oben schwenken können, wobei durch Zünden der Zündpille der Rückhalteverschluss des Gasgenerators weggesprengt werden kann, um schlagartig Gasdruck in die Hubzylinder geben zu können. Bei dieser bekannten Vorrichtung kann zwar ein rasches und weitgehend verzögerungsfreies Anheben der Mähwerkseinheiten erreicht werden, allerdings ist dies ohne Austausch des zerstörten Gasgenerators nur einmal möglich. Da andererseits aber beim Mähen oder Bearbeiten größerer Felder oft nicht nur ein einziges Hindernis auftritt und ein Maschinenführer üblicherweise die Feldbearbeitung nicht für einen Wartungsstopp in der Werkstatt unterbricht, kommt es nach dem Auslösen des Gasgenerators bei der weiteren Feldbearbeitung oft zu Kollisionen.

Hiervon ausgehend liegt der vorliegenden Erfindung die Aufgabe zugrunde, eine verbesserte Landmaschine der genannten Art zu schaffen, die Nachteile des Standes der Technik vermeidet und Letzteren in vorteilhafter Weise weiterbildet. Insbesondere soll eine Landmaschine hinsichtlich ihrer Kollisionssicherheit verbessert werden, wobei zerstörungsfrei ein ausreichend schnelles Ausweichen kollisionsgefährdeter Maschinenteile auch wiederholt ohne Nachrüsten von Gasgeneratoren und Zündpillen erreicht werden soll.

Erfindungsgemäß wird diese Aufgabe durch eine Maschine gemäß Anspruch 1 gelöst. Bevorzugte Ausgestaltungen der Erfindung sind Gegenstand der abhängigen Ansprüche.

Es wird also vorgeschlagen, zusätzlich zu der normalen Betriebsdruckversorgung, mit der die Arbeitswerkzeugeinheit am Vorgewende in die Vorgewendestellung bringbar beziehungsweise in eine Straßentransportstellung verbracht werden kann, eine zweite hydraulische Sonderdruckversorgung vorzusehen, die ein im Vergleich zum normalen Anheben in die Vorgewendestellung deutlich schnellere Betätigung der Arbeitswerkzeugeinheit ermöglicht. Erfindungsgemäß ist zusätzlich zur Betriebsdruckversorgung eine Schnellbetätigungsvorrichtung mit einem Hochdruckhydraulikspeicher zum schlagartigen Betätigen des genannten oder eines weiteren Hydraulikaktors zum schlagartigen Anheben der Arbeitswerkzeugeinheit aus einem Kollisionsbereich vorgesehen. Zum einen erlaubt eine solche Hochdruckbeaufschlagung mit Hydrauliköl aufgrund dessen Inkompressibilität im Vergleich zu einer Gasbeaufschlagung ein nochmals schnelleres Wegbewegen beziehungsweise Anheben der Arbeitswerkzeugeinheit. Zum anderen können die normale Betriebsdruckversorgung und der Hochdruckspeicher aufgrund des Umstandes, dass beide mit demselben Medium, nämlich Hydrauliköl, zusammenarbeiten und Teile des Hydraulikkreises gemeinsam genutzt werden.

Insbesondere kann der genannte Hochdruckhydraulikspeicher zerstörungsfrei auslösbar und nachladbar ausgebildet sein, sodass die Schnellbetätigungsvorrichtung auch mehrfach ausgelöst werden kann, ohne dass hierfür Teile der Vorrichtung ausgetauscht werden müssten.

In vorteilhafter Weiterbildung der Erfindung kann der genannte Hochdruckhydraulikspeicher dabei von der normalen Betriebsdruckversorgung, die zum Anheben der Arbeitswerkzeugeinheit in die Vorgewende- und/oder Transportstellung verwendet wird, nachgeladen werden, wobei hier der Hochdruckhydraulikspeicher in geeigneter Weise, beispielsweise über ein Rückschlagventil mit der genannten Betriebsdruckversorgung verbindbar ist, um einerseits das Nachladen des Hochdruckhydraulikspeichers zu erlauben, andererseits aber bei Auslösen des Hochdruckhydraulikspeichers einen Druckschlag in die normale Hydraulikdruckversorgung zu verhindern.

Durch eine solche Nachladbarkeit des Hochdruckhydraulikspeichers durch die normale Betriebsdruckversorgung, die üblicherweise vom Schlepper herkommen kann, ist die Maschine auch für größere Flächen, auf denen bei einem Bearbeitungsgang bisweilen mehrere Hindernisse auftreten und ein mehrfaches Ausweichen aus dem Kollisionsbereich erforderlich ist, bestens gerüstet.

Das Auslösen des Hochdruckhydraulikspeichers kann vorteilhafterweise insbesondere mittels eines Schaltventils erfolgen, das mehrfach auslösbar beziehungsweise mehrfach zwischen einer freigebenden und einer rückhaltenden Stellung hin und bewegbar ist, sodass nach einem Auslösen das Schaltventil wieder zurück in seine zurückhaltende Stellung verbracht werden kann, um den Hochdruckhydraulikspeicher wieder nachladen zu können. Das genannte Schaltventil kann dabei ein Magnetschaltventil beispielsweise in Form eines Mehrwegeventils sein.

Vorteilhafterweise kann das genannte Schaltventil dabei in seiner Rückhaltelstellung ein Rückschlagventil bilden beziehungsweise eine unidirektionale Rückhaltefunktion vorsehen, wobei in der genannten Rückhaltestellung das Schaltventil den Druck von dem Hochdruckhydraulikspeicher in den Hydraulikaktor sperrt und umgekehrt einen Druck beziehungsweise eine Fluidströmung unter entsprechendem Druck durch das Schaltventil in den Hochdruckhydraulikspeicher hinein zulässt. Dementsprechend braucht kein separates Nachladeventil angebracht werden, sondern das Nachladen kann ebenfalls über das Schaltventil erfolgen, wobei dieses in seiner Rückhaltestellung sein kann. Eine solche Ausbildung des Schaltventils zum Auslösen des Hochdruckhydraulikspeichers erlaubt es auch, die Betriebsdruckversorgung an nahezu beliebiger Stelle des Hydraulikkreises anzuschließen und trotzdem auch zum Nachfüllen des Hochdruckhydraulikspeichers zu nutzen.

In vorteilhafter Weiterbildung der Erfindung kann der Hochdruckhydraulikspeicher mit dem genannten Schaltventil zu einer vormontierten Baugruppe modulartig zusammengefasst sein, die als Einheit handhabbar und montierbar ist. Dies erlaubt es insbesondere, die Schnellbetätigungsvorrichtung in einfacher Weise auch nachzurüsten, indem der genannte Hochdruckspeicher mit dem vormontierten Schaltventil an geeigneter Stelle an den Hydraulikkreis zum Betätigen des Hydraulikaktors zum Anheben der Arbeitswerkzeugeinheit anmontiert wird. Hierzu brauchen lediglich die Anschlüsse des genannten Schaltventils an geeigneter Stelle an die Betätigungsleitung angeschlossen werden, über die der Hydraulikaktor beaufschlagbar ist, um das Arbeitsaggregat auszuheben.

Der genannte Hochdruckhydraulikspeicher kann hierbei mehrere Speicherbausteine aufweisen. Beispielsweise können zwei Hochdruckspeicherbausteine parallel geschaltet an das genannte Schaltventil angeschlossen und mit diesem zu einem Einbaumodul zusammengefasst sein.

Mittels eines solchen Hochdruckhydraulikspeichers kann schlagartig ein beträchtlicher Impuls freigesetzt werden, der es dem Aktor ermöglicht, das sicherheits- bzw. kollisionsrelevante Maschinenteil schlagartig anzuheben oder in anderer Weise aus dem Kollisionsbereich wegzubewegen, um eine plötzlich auftretende Gefahr zu beseitigen. Ein solcher Hochdruckhydraulikspeicher kann durch bloßes Öffnen eines Ventils oder einer Absperrung verzögerungsfrei ausgelöst werden, so dass das gespeicherte, unter hohem Druck stehende Hydraulikdruckvolumen schlagartig in den Hydraulikaktor schießen kann und einen entsprechenden Druckimpuls bereitstellt.

Besondere Vorteile ergeben sich, wenn der Hochdruckhydraulikspeicher in Verbindung mit einer Schnellbetätigungsvorrichtung eingesetzt wird, die eine Erfassungsvorrichtung zur Erfassung von in einen Kollisionsbereich geratenden Hindernissen sowie eine Steuervorrichtung zum automatischen Auslösen des Hochdruckhydraulikspeichers in Abhängigkeit der Erfassung eines Hindernisses aufweist. Durch die sehr hohe Geschwindigkeit, mit der der Maschinenteil mittels des Druckimpulses aus dem Hochdruckhydraulikspeicher wegbewegt werden kann, kann die Erfassungsvorrichtung auch bei höheren Fahrgeschwindigkeiten einen recht nahe vor dem Maschinenteil liegenden Bereich überwachen, so dass Fehlerkennungen vermieden und Abstimmungsprobleme zwischen Erfassung und Auslösen der Bewegung beispielsweise bei Kurvenfahrten oder dergleichen reduziert werden können.

Der Hochdruckhydraulikspeicher kann grundsätzlich in verschiedener Weise eingesetzt werden, um die gewünschte Bewegung des Maschinenteils zu erzeugen. Gemäß einer besonderes vorteilhaften Ausführung der Erfindung kann der Hochdruckhydraulikspeicher mit einem Hydraulikzylinder gekoppelt sein, der an sich nicht für die regulären, während des Betriebs erforderlichen Hub- und Senkbewegungen, die mit geringeren Stellgeschwindigkeiten ausgeführt werden, wie beispielsweise am Vorgewende oder für den Straßentransport, verwendet wird.

In alternativer Weise kann der Hochdruckhydraulikspeicher jedoch auch mit dem Hydraulikzylinder gekoppelt sein, der an sich für herkömmliche Stellbewegungen vorgesehen ist und somit eine Doppelfunktion erfüllt. Der Hydraulikzylinder kann hierzu insbesondere mit einem an sich herkömmlichen Druckmittelkreis wie beispielsweise dem Hydraulikkreis des Schleppers gekoppelt sein, um mit Druckfluid aus diesem Druckmittelkreis entsprechende Stellbewegungen zu erzeugen. Zusätzlich wird der Hydraulikzylinder mit dem Hochdruckhydraulikspeicher gekoppelt, um bei Auftreten einer entsprechenden Situation durch die explosionsartige Beaufschlagung mit dem Druckimpuls aus dem Hochdruckhydraulikspeicher eine entsprechende Stellbewegung zu erzeugen.

Der genannte Hydraulikzylinder kann dabei einem Tragarm zugeordnet sein, an dem die Arbeitswerkzeugeinheit, insbesondere die Mähwerkseinheit beziehungsweise der Rechkreisel, aufgehängt ist, wobei der genannte Tragarm um eine liegende, in Fahrtrichtung ausgerichtete Achse mittels des Hydraulikzylinders nach oben verschwenkt werden kann. Hierdurch kann die Arbeitswerkzeugeinheit durch die normale Betriebsdruckversorgung in die Vorgewende- und/oder Transportstellung ausgehoben werden. Wird der Druck im Puls des Hochdruckhydraulikspeichers ausgelöst, kann derselbe Hydraulikzylinder den Tragarm mit deutlich höherer Stellgeschwindigkeit nach oben bewegen, um die Mähwerkseinheit oder den Rechkreisel aus dem Kollisionsbereich zu verbringen. Alternativ wäre es auch möglich, dem genannten Tragarm zusätzlich zu dem normalen Hubzylinder einen separaten Schnellhubzylinder zuzuordnen, der von dem Hydraulikhochdruckspeicher her betätigbar ist, während der andere Hydraulikzylinder von der normalen Betriebsdruckversorgung her speisbar ist.

Gemäß einer vorteilhaften Ausführung der Erfindung kann die zuvor genannte Schnellbetätigungsvorrichtung auch Teile einer Dreipunktaufhängung mit Ober- und Unterlenkern sein, von denen zumindest einem der genannte Hydraulikzylinder zugeordnet ist, der in der genannten Weise mit dem Hochdruckhydraulikspeicher gekoppelt ist, um eine schlagartige Bewegung der Dreipunktaufhängung herbeiführen zu können. Insbesondere kann der Hydraulikzylinder der Dreipunktaufhängung dabei derart zugeordnet sein, dass ein Ausheben des an der Dreipunktaufhängung angelenkten Geräts durch den Druckimpuls des Hochdruckhydraulikspeichers bewirkt werden kann. Der Hydraulikzylinder kann hierbei ein separater Stellzylinder sein, der mit einem der Lenker der Aufhängung verbunden ist. Insbesondere jedoch kann auch einer der Lenker selbst, beispielsweise der Oberlenker, als Hydraulikzylinder ausgebildet sein, dem der Hochdruckhydraulikspeicher zugeordnet ist.

Die Erfindung wird nachfolgend anhand verschiedener Ausführungsbeispiele und zugehöriger Zeichnungen näher erläutert. In den Zeichnungen zeigen:
- Fig. 1:: einen Schaltplan eines Hydraulikreises zum Betätigen eines Hydraulikzylinders zum Ausheben/Wegbewegen des Arbeitsaggregats einer Mäh- oder Heuwerbungsmaschine, wobei dem Hydraulikzylinder ein Hochdruckhydraulikspeicher zum Schnellbetätigen zugeordnet ist,
- Fig. 2:: eine schematische Draufsicht auf die Mähmaschine mit Front- und Seitenmähwerken, die jeweils mittels Hubvorrichtungen ausgehoben werden können, denen jeweils ein Hydraulikkreis gemäß Fig. 1 mit einem Hochdruckhydraulikspeicher zur Erzeugung eines besonderen Hubimpulses zugeordnet sind,

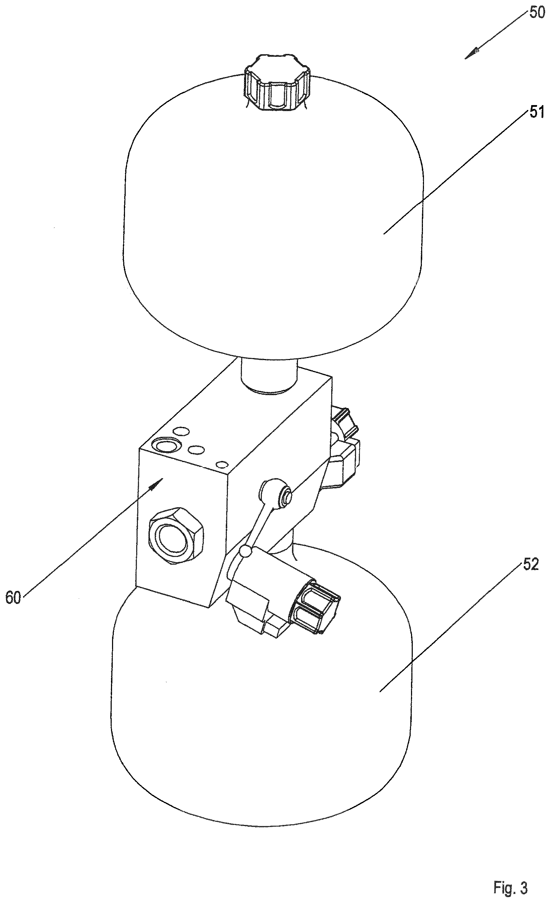

- Fig. 3:: eine schematische, perspektivische Ansicht des Hochdruckhydraulikspeichers mit der daran vorgesehenen Auslöseventileinheit aus den vorhergehenden Figuren.

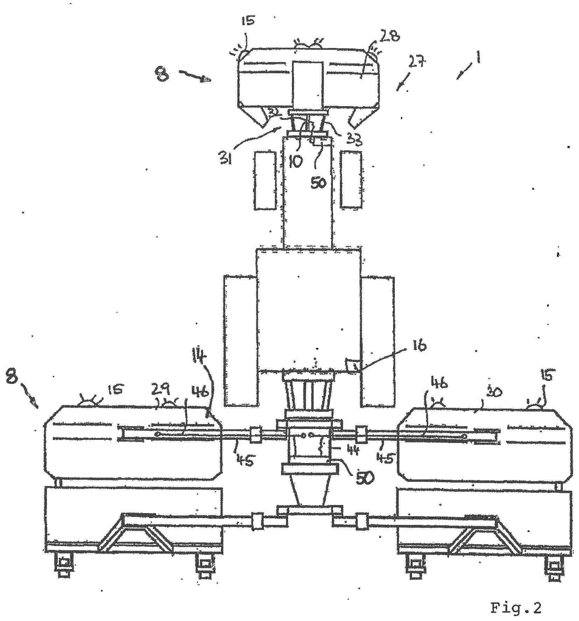

Wie Fig. 2 zeigt, kann die Landmaschine 1 als Mähmaschine ausgebildet sein, die in der gezeichneten Ausführung mehrere Mähwerke, insbesondere ein Frontmähwerk 28 sowie zwei seitlich angeordnete Heckmähwerke 29 und 30 umfassen kann. Das Frontmähwerk 28 ist hierbei über eine Dreipunktanlenkung 31 mit einem Oberlenker 32 und zwei Unterlenkern 33 aufgehängt und anhebbar und absenkbar, wobei beispielsweise dem Oberlenker 32 ein Hydraulikzylinder 10 zugeordnet ist, um das Frontmähwerk 28 ausheben zu können.

Die beiden heckseitigen Mähwerke 29 und 30 sind an einem zentralen Rahmen 44 mittels seitlich auskragender, umliegende, in Fahrtrichtung weisende Achsen schwenkbar gelagerte Tragarme 45 gelagert, die über jeweils einen Hydraulikzylinder 10 angehoben und abgesenkt werden können.

Die genannten Hydraulikzylinder 10 sind hierbei in an sich bekannter Weise mit der Hydraulik des Schleppers 6 verbunden, an dem die Mähmaschine 27 angebaut ist. Der zuvor genannte Rahmen 44 ist in an sich ebenfalls bekannter Weise über eine Dreipunktanlenkung am Heck des Schleppers angebaut. Weiterhin ist in der gezeichneten Ausführungsform den beiden heckseitigen Mähwerken 29 und 30 jeweils ein Konditionierer und/oder ein Querförderer nachgeordnet, um das gemähte Erntegut konditionieren und/oder mittig in einem gemeinsamen Schwad ablegen zu können.

Die genannten Hydraulikzylinder 10, mittels derer das Frontmähwerk 28 und die beiden Heckmähwerke 29 und 30 ausgehoben werden können, können dabei einerseits in einem normalen Betriebsmodus durch die Betriebsdruckversorgung, die vom Schlepper herkommt und steuerbar ausgebildet ist, angehoben und abgesenkt werden, beispielsweise um am Vorgewende in die Vorgewendestellung und zum Straßentransport in eine Transportstellung verbracht werden zu können. Die Stellgeschwindigkeit in dem besagten Betriebsmodus ist hierbei zwar auch bereits ausreichend schnell, um einem zügigen Arbeitsbetrieb gerecht zu werden, im Verhältnis zu der Schnellbetätigung für Kollisionsfälle jedoch relativ niedriger, beispielsweise dadurch, dass von der Betriebsdruckversorgung des Schleppers nur eine begrenzte Ölmenge pro Zeit bereitgestellt wird.

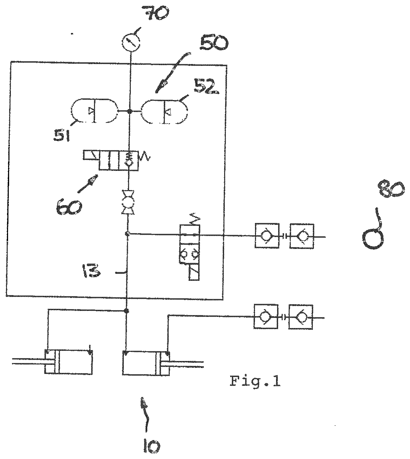

Zum anderen können die genannten Hydraulikzylinder 10 nämlich in einem Schnellbetätigungsmodus betätigt werden, in dem die Hydraulikzylinder 10 nicht oder nicht nur von der normalen Betriebsdruckversorgung her, sondern von einem zusätzlich vorgesehenen Hochdruckhydraulikspeicher 50 beaufschlagt werden. Wie Fig. 1 zeigt, ist ein jeweiliger Hydraulikzylinder 10 über ein Schaltventil 60 von dem genannten Hydraulikhochdruckspeicher her beaufschlagbar, in dem Hydrauliköl unter sehr hohem Druck - beispielsweise im Bereich von über 100 Bar, vorzugsweise auch 200 Bar und mehr - bereitgehalten wird und mit sehr hohen Massenstromvolumina beziehungsweise Ölmengen pro Zeiteinheit bereitgestellt werden können, wenn das genannte Schaltventil 60 ausgelöst beziehungsweise geöffnet wird. Die vom Hochdruckhydraulikspeicher 50 bereitstellbaren Ölmengen pro Zeiteinheit können ein Vielfaches der normalen Ölmengen pro Zeiteinheit betragen, die von der Betriebsdruckversorgung des Schleppers standardmäßig bereitgestellt werden. Beispielsweise können die Schnellbetätigungs-Ölmengen pro Zeiteinheit das Doppelte oder auch das Drei- und Vierfache und sogar das Fünffache oder mehr der Ölmenge pro Zeit der Betriebsdruckversorgung betragen. Wird beispielsweise im normalen Betriebsmodus die Mähwerkseinheit mit einer Ölmenge von etwa 20 Litern pro Minute in die Vorgewendestellung ausgehoben, kann der Hochdruckhydraulikspeicher 50 Ölmengen im Bereich von 100 Litern und mehr pro Minute bereitstellen.

Wie Fig. 1 zeigt, kann das genannte Schaltventil 60 ein Magnetschaltventil sein, welches in seiner Rückhaltestellung, die Fig. 1 zeigt, ein Rückschlagventil bildet oder eine Rückschlagfunktion realisiert. In der gezeigten Rückhaltestellung ist das Hydraulikfluid in dem Hydraulikspeicher 50 sozusagen eingesperrt beziehungsweise zurückgehalten, während umgekehrt Hydraulikfluid über das Schaltventil 60 in den Hochdruckhydraulikspeicher 50 gepumpt werden kann, um den genannten Hochdruckhydraulikspeicher 50 laden zu können.

Wird das Schaltventil 60 in seine Auslöse- beziehungsweise Freigabestellung geschaltet, kann das Hydraulikfluid aus dem Hochdruckhydraulikspeicher 50 herausschießen und in die Zylinderkammer des Hydraulikzylinders 10 gelangen, um diesen schlagartig zu betätigen.

Der genannte Hochdruckhydraulikspeicher 50 kann hierbei aus mehreren Speicherbausteinen beziehungsweise -untereinheiten 51 und 52 zusammengesetzt sein, beispielsweise zwei Hochdruckspeicher umfassen, die parallel zueinander geschaltet und über das genannte Schaltventil 60 an den Hydraulikkreis zum Betätigen des Hydraulikaktors 10 angeschlossen sind.
Dem Hochdruckhydraulikspeicher 50 kann ein Manometer 70 oder eine andere Druckeinstellvorrichtung zum Einstellen des Speicherdrucks zugeordnet sein.

Wie Fig. 1 zeigt, kann der Hochdruckhydraulikspeicher 50 von der normalen Betriebsdruckversorgung 80 des Schleppers her geladen werden, beispielsweise wenn die Arbeitswerkzeugeinheit in die Vorgewendestellung ausgehoben ist oder in die Transportstellung verbracht ist. Hierzu wird das genannte Schaltventil 60 in die in Fig. 1 gezeigte Rückhaltestellung verbracht, sodass Hydraulikfluid in den Hydraulikspeicher 50 gepumpt werden kann, hieraus aber nicht wieder austreten kann, wenn der Druck der normalen Betriebsdruckversorgung wieder abgesenkt wird, um die Mähwerkseinheit beziehungsweise den Rechkreisel aus der Vorgewendestellung wieder in die Arbeitsstellung abzulassen.

Zusätzlich ist der Hydraulikzylinder 10 der Hubvorrichtung für die jeweilige Mähwerkseinheit von dem genannten Hochdruckhydraulikspeicher 50 beaufschlagbar, um zusätzlich in Notsituationen die Mähwerkseinheit ruckartig nach oben reißen zu können. Der Hydraulikzylinder 10 kann hierzu eine separate Druckmittelkammer aufweisen, in die speziell die von dem Hochdruckhydraulikspeicher 50 bereit gestellte Ölmenge eingespeist werden kann. Eine solche separate Schnellbetätigungskammer kann vorteilhafterweise einen vorbestimmten, separaten Stellweg - der von der Vorgewendestellung abweichen kann - vorsehen und/oder durch einen abweichenden Kammerquerschnitt andere, insbesondere größere Stellkräfte erzeugen. Alternativ oder zusätzlich kann die Hochdruck-Hydraulikmenge jedoch auch in eine Druckmittelkammer des Hydraulikzylinders 10 expandieren, die an sich auch regulär von dem Druckmittel des "normalen" Betriebsdruckmittelkreises vom Schlepper 6 her genutzt wird.
Der Hochdruckhydraulikspeicher 50 ist in der gezeichneten Ausführungsform über einen Druckmittelkanal 13 mit dem Zylinder 10 verbunden, ggf. kann der Hochdruckhydraulikspeicher 50 aber auch unmittelbar auf dem Zylinder 10 sitzen, um einen kurzen Expansionsweg für das Hydrauliköl sicherzustellen.
In der gezeichneten Ausführungsform ist der Hochdruckhydraulikspeicher 50 Teil einer umfassenderen Schnellbetätigungsvorrichtung 14, die erfindungsgemäß eine Erfassungsvorrichtung 15 in Form eines Bodenabtastsensors, der berührungslos arbeiten und beispielsweise als Ultraschallsensor ausgebildet sein kann, sowie eine Steuervorrichtung 16 zur Ansteuerung des Hochdruckhydraulikspeichers 50 umfasst. Wie Fig. 1 zeigt, ist die Steuervorrichtung 16 mit der Erfassungsvorrichtung 15 verbunden. Sobald Letztere ein Hindernis vor der jeweiligen Werkzeugeinheit entdeckt, das die jeweilige Werkzeugeinheit beschädigen würde, steuert die Steuervorrichtung 16 den Hochdruckhydraulikspeicher 50 an, um diesen auszulösen und hierdurch die Mäheinheit nach oben zu reißen.

## Patentansprüche

1. Landmaschine in Form eines an einen Schlepper (6) anbaubaren Grünlandgeräts, insbesondere Mäh- oder Heuwerbungsmaschine (1), mit zumindest einer Arbeitswerkzeugeinheit (8) zum Ausführen der Grünlandbearbeitung, sowie zumindest einem Hydraulikaktor (10) zum Anheben und/oder Wegbewegen der Arbeitswerkzeugeinheit (8) aus einer Arbeitsstellung, wobei der Hydraulikaktor (10) von einer steuerbaren Betriebsdruckversorgung (80) beaufschlagbar ist, **dadurch gekennzeichnet, dass** zusätzlich zur Betriebsdruckversorgung (80) eine Schnellbetätigungsvorrichtung (14) mit einem Hochdruckhydraulikspeicher (80) zum schlagartigen Betätigen des genannten oder eines weiteren Hydraulikaktors (10) zum schlagartigen Anheben der Arbeitswerkzeugeinheit (8) aus einem Kollisionsbereich vorgesehen ist, wobei die Schnellbetätigungsvorrichtung (14) eine Erfassungsvorrichtung (15) in Form eines berührungslos arbeitenden Bodenabtastersensors zur Überwachung eines in Fahrtrichtung vor der Arbeitswerkzeugeinheit (8) liegenden Bereichs und Erfassung von in den Kollisionsbereich geratenden Hindernissen sowie eine mit der Erfassungsvorrichtung (15) verbundene Steuervorrichtung (16) zum automatischen Auslösen des Hochdruckhydraulikspeichers in Abhängigkeit eines vom Bodenabtastersensor erfaßten Hindernisses aufweist.

2. Landmaschine nach dem vorhergehenden Anspruch, wobei der Hochdruckhydraulikspeicher (50) zerstörungsfrei betätigbar und wiederholt nachladbar ausgebildet ist.

3. Landmaschine nach einem der vorhergehenden Ansprüche, wobei der Hochdruckhydraulikspeicher (50) mit der steuerbaren Betriebsdruckversorgung, durch die die Arbeitswerkzeugeinheit (8) in eine Vorgewende- und/oder Transportstellung verbringbar ist, verbindbar und durch die genannte Vertriebsdruckversorgung nachladbar ist.

4. Landmaschine nach einem der vorhergehenden Ansprüche, wobei der Hochdruckhydraulikspeicher (50) über ein Schaltventil (60) mit dem Hydraulikaktor (10) verbindbar ist, welches Schaltventil mehrfach auslösbar und wieder in eine Rückhaltestellung verbringbar ist.

5. Landmaschine nach den beiden vorhergehenden Ansprüchen, wobei das Schaltventil (60) in seiner Rückhaltestellung ein Rückschlagventil bildet, das den Druck des Hochdruckhydraulikspeichers (50) zu dem Hydraulikaktor (10) sperrt und Hydraulikfluid unter entsprechendem Druck über das Schaltventil (60) in den Hochdruckhydraulikspeicher eintreten lässt, wobei die steuerbare Betriebsdruckversorgung (80) über das genannte Schaltventil (60) mit dem Hochdruckhydraulikspeicher (50) verbindbar ist, sodass der Hochdruckhydraulikspeicher (50) über das Schaltventil (60) in dessen Rückhaltestellung von der Betriebsdruckversorgung her nachladbar ist.

6. Landmaschine nach Anspruch 4 oder 5, wobei der Hochdruckhydraulikspeicher (50) und das Schaltventil (60) mit zumindest einem Anschluss zum Anschließen an den Hydraulikkreis zur Versorgung des Hydraulikaktors (10) eine vormontierte, modulartige Baugruppe bildet, die als Einheit verbaubar ist.

7. Landmaschine nach einem der vorhergehenden Ansprüche, wobei eine Nachlade-Steuervorrichtung zum automatischen Nachladen des Hochdruckhydraulikspeichers (50) in Abhängigkeit einer Stellung der Arbeitswerkzeugeinheit (8) und/oder eines Druckniveaus in den von der steuerbaren Betriebsdruckversorgung (80) beaufschlagten Druckkreis zum Betätigen des Hydraulikaktors (10) vorgesehen ist.

8. Landmaschine nach dem vorhergehenden Anspruch, wobei die Nachlade-Steuervorrichtung eine Load-Sensing-Einrichtung zum Steuern des Nachladevorgangs, insbesondere zum Steuern der Betriebsdruckversorgung (80) und/oder Steuern des/eines Nachladeventils, aufweist.

## Claims

1. Agricultural machine, in the type of grassland equipment mountable to a tractor (6), in particular mowing or hay-making machine (1), comprising at least one working tool unit (8) for carrying out grassland works, as well as at least one hydraulic actuator (10) for lifting and/or moving away the working tool unit (8) out of a working position, wherein the hydraulic actuator (10) can be loaded by means of a controllable operating pressure supply (80), **characterized in that** in addition to the operating pressure supply (80), a quick-actuation device (14) having a high-pressure hydraulic accumulator (80) for the sudden actuation of the mentioned or of another hydraulic actuator (10) for the sudden lifting of the working tool unit (8) out of a collision area is provided, wherein the quick-actuation device (14) comprises a detection device (15) in the type of a contactless ground-scanning sensor for monitoring an area located in front of the working tool unit (8) in the traveling direction and for detecting obstacles appearing in the collision area, as well as with a control device (16) connected to the detection device (15) for the automatic triggering of the hydraulic high-pressure accumulator dependent upon an obstacle detected by the ground-scanning sensor.

2. Agricultural machine according to the preceding claim, wherein the high-pressure hydraulic accumulator (50) is formed to be actuatable in a nondestructive manner and to be repeatedly reloadable.

3. Agricultural machine according to one of the preceding claims, wherein the high-pressure hydraulic accumulator (50) can be connected with the controllable operating pressure supply, by means of which the working tool unit (8) can be brought into a pre-turn-about and/or a transport position, can be connected and can be reloaded by means of the mentioned operating pressure supply.

4. Agricultural machine according to one of the preceding claims, wherein the hydraulic high-pressure accumulator (50) can be connected to the hydraulic actuator (10) via a switch valve (60), which switch valve can be triggered multiple times and can again be brought into a retaining position.

5. Agricultural machine according to the two preceding claims, wherein the switch valve (60), in its retaining position, forms a non-return valve which blocks the pressure of the high-pressure hydraulic accumulator (50) towards the hydraulic actuator (10) and allows hydraulic fluid to enter the high-pressure hydraulic accumulator via the switch valve (60) under a certain pressure, wherein the controllable operating pressure supply (80) can be connected to the hydraulic high-pressure accumulator (80) via the mentioned switch valve (60), so that the hydraulic high-pressure accumulator (50), via the switch valve (60) and in the retaining position thereof, can be reloaded from the operating pressure supply.

6. Agricultural machine according to claim 4 or 5, wherein the hydraulic high-pressure accumulator (50) and the switch valve (60) with at least one port for connection to the hydraulic circuit for the supply of the hydraulic actuator (10) form a pre-assembled, modular assembly, which can be installed as one unit.

7. Agricultural machine according to one of the preceding claims, wherein a reloading control device is provided for the automatic reloading of the high-pressure hydraulic accumulator (50) depending on a position of the working tool unit (8) and/or on a pressure level in the pressure circuit applied by the controllable operating pressure supply (80) and for actuating the hydraulic actuator (10).

8. Agricultural machine according to the preceding claim, wherein the reloading control device comprises a load-sensing means for controlling the reloading operation, in particular for controlling the operating pressure supply (80) and/or for controlling the/a reloading valve.

## Revendications

1. Machine agricole sous forme d'une machine de fenaison, en particulier une faucheuse ou une faneuse (1), pouvant être montée sur un tracteur (6), comprenant au moins une unité d'outil de travail (8) pour procéder au traitement des herbages, et au moins un actionneur hydraulique (10) pour soulever et/ou écarter l'unité d'outil de travail (8) depuis une position de travail, l'actionneur hydraulique (10) pouvant être alimenté par un distributeur de pression de service (80) réglable, **caractérisée en ce qu'**en plus du distributeur de pression de service (80), un dispositif d'actionnement rapide (14) est prévu avec un accumulateur hydraulique haute pression (80) pour actionner brusquement ledit ou un autre actionneur hydraulique (10) afin de brusquement soulever un coup de l'unité d'outil de travail (8) hors de la zone de collision, le dispositif d'actionnement rapide (14) présentant un dispositif de détection (15) sous forme d'un détecteur de garde au sol travaillant sans contact pour surveiller une zone s'étendant dans le sens de la marche devant l'unité d'outil de travail (8) et pour détecter les obstacles qui se trouvent dans la zone de collision ainsi qu'un dispositif de commande (16) relié au dispositif de détection (15) pour déclencher automatiquement le vérin hydraulique haute pression dès qu'un obstacle est détecté par le détecteur de garde au sol.

2. Machine agricole selon la revendication précédente, dans laquelle le vérin hydraulique haute pression (50) peut être actionné sans être détruit et étant conçu pour être rechargé de manière répétée.

3. Machine agricole selon l'une quelconque des revendications précédentes, dans laquelle le vérin hydraulique haute pression (50) peut être relié au distributeur de pression de service réglable grâce auquel l'unité d'outil de travail (8) peut être relevée dans une position de bout de champ et/ou de transport, et peut rechargée par le distributeur de pression de service mentionné.

4. Machine agricole selon l'une quelconque des revendications précédentes, dans laquelle le vérin hydraulique haute pression (50) peut être relié via une soupape de commutation (60) à l'actionneur hydraulique (10), ladite soupape de commutation pouvant être déclenchée à plusieurs reprises et replacée dans une position de retenue.

5. Machine agricole selon les deux revendications précédentes, dans laquelle la soupape de commutation (60) forme dans sa position de retenue un clapet anti-retour qui bloque la pression du vérin hydraulique haute pression (50) vers l'actionneur hydraulique (10) et laisse passer du fluide hydraulique, sous une pression correspondante, via la soupape de commutation (60) dans le vérin hydraulique haute pression, le distributeur de pression de service (80) réglable pouvant être relié via ladite soupape de commutation (60) au vérin hydraulique haute pression (50), de telle sorte que le vérin hydraulique haute pression (50) peut être rechargé via la soupape de commutation (60) dans sa position de retenue par le distributeur de pression de service.

6. Machine agricole selon la revendication 4 ou 5, dans laquelle le vérin hydraulique haute pression (50) et la soupape de commutation (60) forment un assemblage modulaire prémonté qui peut être installé sous forme d'une unité avec au moins un raccordement pour un branchement sur le circuit hydraulique afin d'alimenter l'actionneur hydraulique (10).

7. Machine agricole selon l'une quelconque des revendications précédentes, dans laquelle un contrôleur de rechargement est prévu pour le rechargement automatique du vérin hydraulique haute pression (50) en fonction d'une position de l'unité d'outil de travail (8) et/ou d'un niveau de pression dans le circuit de pression alimenté par le distributeur de pression de service (80) réglable pour activer l'actionneur hydraulique (10).

8. Machine agricole selon la revendication précédente, dans laquelle le contrôleur de rechargement comporte un dispositif load-sensing pour régler le processus de rechargement, en particulier pour régler le distributeur de pression de service (80) et/ou pour régler la/une soupape de rechargement.
